# EUROPÄISCHE PATENTANMELDUNG

(11) **EP 3 668 082 A1**
(43) Veröffentlichungstag der Anmeldung: **17.06.2020**
(21) Anmeldenummer: 19210046.9
(22) Anmeldetag: 19.11.2019
(51) Int. Cl.: H04N 5/232, H04N 5/225, G02B 3/14, G02B 7/02, G02B 7/04, G02B 26/00

(54) **OPTOELEKTRONISCHER SENSOR UND VERFAHREN ZUM FOKUSSIEREN**

(30) Priorität: 13.12.2018 DE 102018132015
(71) Anmelder: SICK AG, 79183 Waldkirch (DE)
(72) Erfinder: Müller, Romain, 79252 Stegen (DE); Schneider, Florian, 79276 Reute (DE)

(57) **Zusammenfassung**

Es wird ein optoelektronischer Sensor (10) mit einem Lichtsender (22) und/oder einem Lichtempfänger (16) und einer dem Lichtsender (22) und/oder dem Lichtempfänger (16) vorgeordneten Optik (14, 24), die eine adaptive Linse (26) aufweist, deren Brennweite veränderbar ist, sowie mit einer Steuer- und Auswertungseinheit (18) angegeben, die dafür ausgebildet ist, ein Steuersignal an die adaptive Linse (26) auszugeben, um eine Brennweite einzustellen, sowie eine Fokussierzeit zu bestimmen, nach welcher die Brennweite eingestellt ist. Dabei ist die Steuer- und Auswertungseinheit (18) weiterhin dafür ausgebildet, die Fokussierzeit in Abhängigkeit von der einzustellenden Änderung der Brennweite zu bestimmen.

## Beschreibung

Die Erfindung betrifft einen optoelektronischen Sensor und ein Verfahren zum Fokussieren der Optik eines optoelektronischen Sensors nach dem Oberbegriff von Anspruch 1 beziehungsweise 12.

In nahezu jedem optischen Sensor ist eine Sende- beziehungsweise Empfangsoptik vorgesehen. Häufig wird diese Optik mit Hilfe einer Fokusverstellung auf einen bestimmten Abstand oder Abstandsbereich scharf eingestellt, indem elektromechanisch oder optomechanisch die Position der Linsen und damit die Schnittweite der Sende- oder Empfangsoptik verstellt wird, beispielsweise mit Schrittmotoren oder Tauchspulen. Solche Lösungen erfordern viel Bauraum und stellen zudem hohe Ansprüche an den mechanischen Aufbau zur präzisen Einstellbarkeit, damit eine vorgegebene Fokuslage auch tatsächlich angenommen wird.

Eine Alternative ist der Einsatz von Optiken, bei denen nicht die Schnittweite, sondern unmittelbar die Form und damit die Brennweite der Linse selbst mittels einer Spannungsansteuerung variiert wird. Insbesondere werden dafür Gel- oder Flüssiglinsen genutzt. Bei einer Gellinse wird eine silikonartige Flüssigkeit mittels piezoelektrischer oder induktiver Aktoren mechanisch deformiert. Flüssiglinsen nutzen beispielsweise den sogenannten Elektrobenetzungseffekt (electrowetting) aus, indem zwei nicht mischbare Flüssigkeiten vorzugsweise ähnlicher Dichte, aber mit unterschiedlichen Brechungsindices und elektrischen Eigenschaften in einer Kammer übereinander angeordnet werden. Bei Anlegen einer Steuerspannung ändern die beiden Flüssigkeiten ihre Oberflächenspannung in unterschiedlicher Weise, so dass die innere Grenzfläche der Flüssigkeiten spannungsabhängig ihre Krümmung verändert.

Flüssiglinsen haben einen weitaus größeren Temperaturausdehnungskoeffizienten als Glaslinsen, und deshalb sind thermische Einflüsse besonders groß. Es sind verschiedene Ansätze bekannt, um durch Temperaturdriften bedingte Abweichungen zwischen gewünschter und tatsächlicher Fokuslage entgegenzuwirken oder sie zu kompensieren.

In der US 9 575 221 B2 wird dazu die Temperatur der Flüssiglinse gemessen und durch ein Heizelement und eine Regelschleife stabilisiert. Das ist aber relativ aufwändig. Es ist denkbar, zumindest auf das Heizelement zu verzichten, indem die Steuerspannungen in Abhängigkeit von der gemessenen Temperatur der Flüssiglinse anhand einer Korrekturmatrix angepasst werden.

Die EP 2 924 974 A1 nutzt eine besondere adaptive Linse, die auch kippbar ist und so die Richtung der optischen Achse variiert. Es wird ein Bildmerkmal überwacht und aus einem Vergleich von dessen Soll- und Istposition eine Driftkorrektur bestimmt. Das ist ein indirektes Vorgehen, das nicht nur Informationen der adaptiven Linse verwendet. Es bedarf der Möglichkeit, die adaptive Linse zu kippen und das Bildmerkmal geeignet zu erfassen.

Es gibt bei der Kompensation von thermischen Einflüssen auf die eingestellte Brennweite noch ein zweites Problem, nämlich die Trägheit der adaptiven Linse. Wird mit dem Sensor detektiert, ehe die adaptive Linse die gewünschte Fokuslage eingenommen hat, so führt auch das zu Störeffekten, selbst wenn die gewünschte Fokuslage am Ende noch erreicht würde. Nun ist es natürlich möglich, stets eine ausreichend lange Zeit mit hinreichend Sicherheitspuffer abzuwarten, aber das macht den Sensor sehr langsam.

Gemäß US 2011/0200314 A1 misst daher eine Kamera die Temperatur und wartet eine temperaturspezifische Zeit ab. Das geht zwar schneller, als eine konstante Zeit verstreichen zu lassen, berücksichtigt aber das Verhalten der adaptiven Linse noch nicht ausreichend und schöpft daher die Möglichkeiten zur Beschleunigung nicht aus. In der WO 2006/051437 A1 wird ebenfalls eine Bilderfassung verhindert, solange die Flüssiglinse eine neue Brennweite einstellt.

Es ist daher Aufgabe der Erfindung, die Änderung von Fokuslagen mit einer adaptiven Linse zu verbessern.

Diese Aufgabe wird durch einen optoelektronischen Sensor und ein Verfahren zum Fokussieren der Optik eines optoelektronischen Sensors nach Anspruch 1 beziehungsweise 12 gelöst. Der Sensor nutzt eine Optik mit adaptiver Linse als Sendeoptik eines Lichtsenders und/oder als Empfangsoptik eines Lichtempfängers. Die Brennweite der adaptiven Linse wird durch Anlagen eines Steuersignals verändert. Damit stellt eine Steuer- und Auswertungseinheit eine jeweils gewünschte Fokuslage ein. Sie bestimmt außerdem eine Fokussierzeit, wie lange es dauert, bis die Umfokussierung abgeschlossen ist, d. h. die adaptive Linse die neue Brennweite eingestellt hat. Nach der Fokussierzeit ist der Sensor mit der neuen Fokuslage wieder voll einsatzfähig.

Die Erfindung geht von dem Grundgedanken aus, dass Umfokussierungen unterschiedlich lange dauern. Deshalb hängt die Fokussierzeit davon ab, wie groß die Änderung der Brennweite ist. Anders ausgedrückt ist die Fokussierzeit eine Funktion der Differenz der neuen und bisherigen Brennweite. Deshalb wird eine Fokussierzeit bestimmt, die vorzugsweise keine Konstante ist, und wenn, dann wurden Fokussierzeiten für die denkbaren Änderungen der Brennweite bestimmt und möglichst eng nach oben abgeschätzt, um diese Konstante zu erhalten. Die Fokussierzeit ist kein Messwert, die Brennweite wird für deren Bestimmung nicht überprüft, auch wenn das ergänzend vorstellbar wäre Vielmehr beruht die Bestimmung der Fokussierzeit auf Annahmen, die beispielsweise aus einem Modell oder einer Simulation abgeleitet oder eingelernt wurden.

Die Erfindung hat den Vorteil, dass variable Ansprechzeiten der adaptiven Linse berücksichtigt werden können. Damit wird die Trägheit zwar nicht überwunden, aber ihr Einfluss auf das notwendige Minimum reduziert. Die Erfassung mit dem Sensor wird schneller und, weil nicht mit einer angesteuerten, aber noch nicht eingenommenen Fokuslage gearbeitet werden muss, auch genauer. Die erfindungsgemäße Berücksichtigung der Fokussierzeit lässt sich gut mit der Behandlung von Temperatureffekten vereinbaren, wie im Folgenden noch dargelegt.

Die Steuer- und Auswertungseinheit ist bevorzugt dafür ausgebildet, den Ablauf der Fokussierzeit zu signalisieren und/oder die weitere Sensorfunktion bis zum Ablauf der Fokussierzeit zu verzögern. Dazu kann die Sensorfunktion ganz blockiert werden, bis die Fokussierzeit abgelaufen ist, also erst danach wieder auslösbar sein. Alternativ wird der Ablauf der Fokussierzeit als verzögerter Auslösezeitpunkt für die weitere Sensorfunktion genutzt. Dadurch wird jeweils sichergestellt, dass der Sensor seine weitere Funktion nicht schon wahrnimmt, ehe die gewünschte Fokuslage tatsächlich erreicht ist. Die Sensorfunktion muss aber auch nicht blockiert sein, der Sensor arbeitet dann beispielsweise solange in einem Modus, der von größeren Fehlern durch unzureichende Fokussierung ausgeht.

Das Steuersignal ist bevorzugt ein Spannungssignal. Damit wird die Brennweite der adaptiven Linse durch Anlegen der mit dem Spannungssignal vorgegebenen Spannung verstellt, oder anders ausgedrückt mit einem Spannungssprung von der bisher anliegenden Spannung auf die durch das Spannungssignal vorgegebene neue Spannung. Die Fokussierzeit ist damit eine Funktion des Spannungssprungs ΔV.

Die Steuer- und Auswertungseinheit ist bevorzugt dafür, die Fokussierzeit in Abhängigkeit von der derzeitigen und der einzustellenden Brennweite zu bestimmen. Das beruht auf der Erkenntnis, dass die Fokussierzeit nicht allein vom Ausmaß der Änderung der Brennweite, sondern auch davon abhängen kann, welche konkrete bisherige Brennweite damit auf welche neue Brennweite verstellt wird. Tatsächlich werden nicht zwei neue Parameter eingeführt, sondern es kommt nur einer hinzu, also die derzeitige Brennweite oder die einzustellende Brennweite. Über Differenzbildung mit dem erfindungsgemäß ohnehin berücksichtigten Ausmaß der Änderung der Brennweite wird dadurch auch der zweite Parameter einzustellende Brennweite beziehungsweise die derzeitige Brennweite festgelegt. Die Fokussierzeit ist damit jetzt eine Funktion von derzeitiger und neuer Brennweite, oder äquivalent von derzeitiger Brennweite und Ausmaß der Änderung beziehungsweise von Ausmaß der Änderung und neuer Brennweite. Mit einem Spannungssignal als Steuersignal wird die Fokussierzeit eine Funktion der bisherigen Spannung V1 und der neuen Spannung V2, beziehungsweise von V1 und ΔV:=V2-V1 oder von ΔV und V2.

Der Sensor weist bevorzugt eine Temperaturmesseinheit zur Bestimmung der Temperatur der adaptiven Linse auf. Das wird beispielsweise für eine Temperaturkompensation der Steuersignale genutzt.

Die Steuer- und Auswertungseinheit ist bevorzugt dafür ausgebildet, die Fokussierzeit in Abhängigkeit von der Temperatur zu bestimmen. Die Fokussierzeit wird damit noch genauer bestimmt und erhält eine zusätzliche Temperaturabhängigkeit. Demnach ist die Fokussierzeit nun eine Funktion des Ausmaßes der Änderung der Brennweite und der Temperatur, beziehungsweise der bisherigen Brennweite, der neuen Brennweite und der Temperatur. Mit einem Spannungssignal als Steuersignal wird die Fokussierzeit eine Funktion von ΔV und T beziehungsweise von V1, V2 und T.

Der Sensor weist bevorzugt ein Temperaturänderungselement auf. Dabei handelt es sich um eine Heizung, eine Kühlung oder beides, insbesondere ein Peltierelement. Gemeinsam mit einer Temperaturmesseinheit kann so ein Regelkreis zur Temperaturstabilisierung aufgebaut werden, die Temperaturabhängigkeit sowohl der Steuersignale als auch der Fokussierzeit ist damit beseitigt. Es kann aber sogar sinnvoll sein, ohne Regelung die adaptive Linse einfach nur mit einer festen oder beliebigen, jedenfalls nicht geregelten Heizleistung zu erwärmen, da sie dann schneller eine neue Fokuslage einnimmt. Vorzugsweise wird die Temperatur gemessen, um die damit erreichte kürzere Fokussierzeit auch bestimmen und nutzen zu können.

Der Sensor weist vorzugsweise einen Speicher mit einer Nachschlagtabelle (LUT, Lookup Table) für Fokussierzeiten auf. Dieser Speicher ist beispielsweise Teil der Steuer- und Auswertungseinheit, jedenfalls hat sie darauf Zugriff. Bei einer Umfokussierung wird dann aus der Tabelle je nach Ausführungseinheit für die gewünschte Änderung der Brennweite, die bisherige und neue Brennweite und eventuell die aktuelle Temperatur, die Fokussierzeit und damit die Mindestwartezeit abgelesen, bis die adaptive Linse tatsächlich die gewünschte Form für die neue Fokuslage eingenommen hat. Alternativ zu einer Nachschlagtabelle kann für die Fokussierzeit auch eine Funktion oder ein Algorithmus hinterlegt sein.

Die Abhängigkeit der Fokussierzeit von möglichen Änderungen der Brennweite ist bevorzugt vorab dadurch bestimmt, dass eine jeweilige Änderung durchgeführt, während der Änderung die Fokuslage mit einem Gütemaß bewertet und die zugehörige Fokussierzeit als die Dauer bis zu einem Erreichen eines Mindestgütemaßes bestimmt wird, wobei insbesondere das Gütemaß ein Kontrastmaß und/oder das Mindestgütemaß ein Prozentsatz eines maximalen Gütemaßes nach langer Wartezeit ist. Die denkbaren Umfokussierungen werden also ein- oder mehrfach durchgeführt, womöglich auch bei verschiedenen Temperaturen. Während des Verstellens der Brennweite werden die Zwischenlagen der Brennweite bewertet, vorzugsweise über den Kontrast. Sobald diese Bewertung sich einem optimalen Zustand hinreichend annähert, wobei vorzugsweise der vollständig eingeschwungene Zustand nach für praktische Belange unendlicher Zeit als Maßstab herangezogen werden kann, wird die Umfokussierung als abgeschlossen betrachtet, und die dafür erforderliche Dauer wird als zugehörige Fokussierzeit gespeichert. Diese Ermittlung von Fokussierzeiten für deren spätere Bestimmung bei Umfokussierungen im Betrieb kann einmalig für alle Sensoren einer Bauform oder individuell für jeden Sensor während dessen Herstellung erfolgen. Eine weitere Möglichkeit ist eine automatische Prozedur, die in der Steuer- und Auswertungseinheit implementiert ist und am Betriebsort beispielsweise während des Einrichtens oder einer Wartung durchgeführt wird.

Die adaptive Linse ist bevorzugt eine Flüssig- oder Gellinse und weist insbesondere zwei nicht mischbare Medien auf, deren gegenseitige Grenzfläche durch Anlegen einer Spannung eine der Spannung entsprechende Krümmung aufweist. Solche Linsen bieten die gewünschten Einstellmöglichkeiten der Fokuslage und sind dabei sehr bauklein und kostengünstig. Sie reagieren relativ stark auf Temperaturschwankungen und zeigen ein recht komplexes Verzögerungsverhalten bei Umfokussierung, so dass die Erfindung dafür besonders vorteilhaft ist.

Der Sensor ist bevorzugt als Kamera mit einem Bildsensor als Lichtempfänger ausgebildet, wobei nach einem Umfokussieren durch Einstellen einer neuen Brennweite der adaptiven Linse eine Aufnahme erst nach Ablauf der Fokussierzeit ausgelöst wird. Die adaptive Linse ist dabei im Objektiv der Kamera eingesetzt oder ist das Objektiv. Die Kamera blockiert während der Fokussierzeit das Auslösen von Aufnahmen oder verzögert das Auslösen bis nach der Fokussierzeit.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines optoelektronischen Sensors mit einer adaptiven Linse in der Empfangsoptik;
- Fig. 2: eine schematische Schnittdarstellung eines optoelektronischen Sensors mit einer adaptiven Linse in der Sendeoptik;
- Fig. 3: eine schematische Darstellung einer adaptiven Linse;
- Fig. 4: eine beispielhafte Darstellung eines Spannungssprungs zum Ansteuern einer Umfokussierung; und
- Fig. 5: eine Darstellung der Fokussierzeiten einer adaptiven Linse auf eine bestimmte Brennweite in Abhängigkeit von der bisherigen Brennweite und der Temperatur.

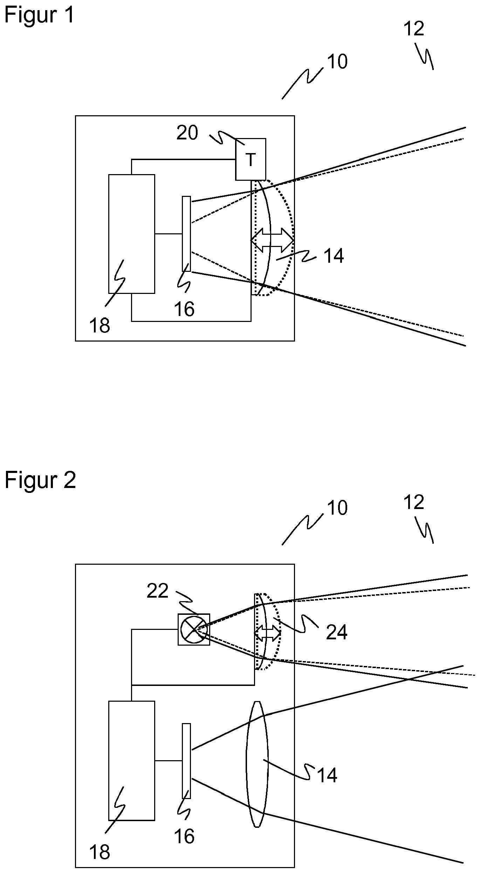

Figur 1 zeigt eine schematische Schnittdarstellung eines optoelektronischen Sensors 10 zur Erfassung von Objektinformationen aus einem Überwachungsbereich 12. Über eine Empfangsoptik 14 erzeugt ein Bildsensor 16, beispielsweise ein CCD- oder CMOS-Chip, Aufnahmen des Überwachungsbereichs 12. Die Bilddaten dieser Aufnahmen werden an eine Steuer- und Auswertungseinheit 18 weitergegeben.

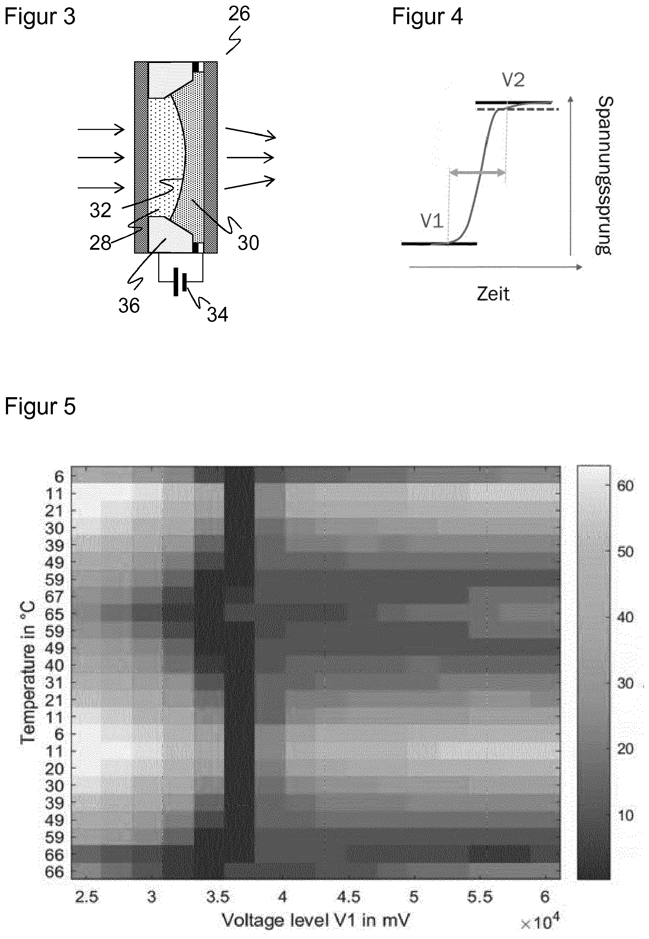

Die Empfangsoptik 14 weist eine adaptive Linse auf, deren Brennweite durch elektronische Ansteuerung der Steuer- und Auswertungseinheit 18 verändert werden kann. Figur 1 zeigt mit gestrichelten Linien beispielhaft eine alternative Brennweiteneinstellung, und das Funktionsprinzip einer denkbaren Bauform der adaptiven Linse wird später unter Bezugnahme auf die Figur 3 näher erläutert. Die Steuer- und Auswerteinheit 18 ist in der Lage, die Fokussierzeit zu bestimmen, welche die adaptive Linse benötigt, um nach Ansteuerung mit einer entsprechenden Spannung die damit gewünschte Brennweite einzustellen. Dadurch kann die weitere Sensorfunktion blockiert oder verzögert werden, bis die transiente Phase der Umstellung der Brennweite abgeschlossen ist. Die Bestimmung der Fokussierzeit wird später unter Bezugnahme auf die Figuren 4 und 5 näher erläutert.

Eine Temperatureinheit 20 ist so angeordnet, dass sie in thermischer Verbindung zu der adaptiven Linse steht. Die Temperatureinheit 20 weist je nach Ausführungsform einen Temperaturfühler zum Messen der Temperatur der adaptiven Linse und/oder ein Heizbeziehungsweise Kühlelement zum Beeinflussen dieser Temperatur auf, beispielsweise ein Peltierelement, das als Ring ausgebildet sein kann.

In manchen Anwendungen, etwa in einem Kühlhaus, arbeiten als Flüssiglinsen ausgebildete adaptive Linsen nicht verlässlich, die dann beheizt werden. Das verkürzt auch unabhängig von der Anwendung die Ansprech- oder Fokussierzeit, bis die adaptive Linse eine neue Brennweite angenommen hat. Hierfür genügt ein effizientes Heizelement. Ein Peltierelement dagegen ist für eine Regelung oder Stabilisierung der Temperatur besser geeignet, da es die Temperatur in beiden Richtungen verändert, dafür nur über eine begrenzte Temperaturdifferenz.

Figur 2 zeigt eine weitere Ausführungsform des optoelektronischen Sensors 10. Diese Ausführungsform unterscheidet sich von der in Figur 1 gezeigten Ausführungsform durch einen Lichtsender 22 mit einer Sendeoptik 24. Die adaptive Linse ist nun Teil der Sendeoptik 24, die Empfangsoptik 14 hat eine feste Fokuslage. Eine Temperatureinheit 20 wie in Figur 1 ist auch in der Ausführungsform der Figur 2 für die adaptive Linse der Sendeoptik 24 möglich. Weiterhin sind Mischformen der Ausführungsformen nach Figur 1 und Figur 2 denkbar, in denen Empfangsoptik 14 und Sendeoptik 24 eine adaptive Linse aufweisen oder eine gemeinsame Optik mit adaptiver Linse für den Bildsensor 16 und den Lichtsender 22 vorgesehen ist, wobei die adaptive Linse wiederum eine Temperatureinheit 20 aufweisen kann. Außerdem kann in Figur 1 auch ein Lichtsender 22 mit einer Sendeoptik ohne adaptive Linse hinzugefügt werden, beispielsweise um den Überwachungsbereich 12 auszuleuchten oder um ein Lichtsignal zu erzeugen, dessen Lichtlaufzeit zur Abstandsmessung bestimmt wird.

Die Figuren 1 und 2 sind also Prinzipdarstellungen, die stellvertretend für eine Vielzahl von Sensoren stehen. Der Sensor 10 gemäß Figur 1 ist beispielsweise eine Kamera mit variablem Fokus, die sich unter anderem in vielfältigen Anwendungen für die Inspektion und Vermessung von Objekten eignet, vorzugsweise in stationärer Montage an einer Förderanlage, welche die Objekte durch den Überwachungsbereich 12 bewegt. Durch den Einsatz an sich bekannter Signal- oder Bildverarbeitungen zum Lesen von Codes entsteht ein Barcodescanner oder ein kamerabasierter Codeleser. Der Bildsensor 16 kann eine Zeilen- oder eine Matrixanordnung von Pixeln aufweisen. In weiteren Ausführungsformen ist anstelle des Bildsensors 16 ein anderer Lichtempfänger verwendet, beispielsweise eine Photodiode oder eine APD (avalanche photodiode). Letzteres wird beispielsweise in einem insbesondere entfernungsmessenden Lichttaster oder einem Laserscanner verwendet.

Auch der Lichtsender 22 kann vielfältige Funktionen erfüllen. Beispielsweise wird mit Hilfe der Sendeoptik 24 ein bestimmter beleuchteter Überwachungsbereich 12 eingestellt, ein scharfes Kontrastmuster, ein scharfes Zielmuster zum Kenntlichmachen eines Aufnahme- oder Lesebereichs oder ein scharfer Lichtfleck in einem bestimmten Abstand projiziert. Damit sind so unterschiedliche Sensoren 10 wie ein kamerabasierter Codeleser, ein Codescanner oder eine 3D-Kamera denkbar.

Figur 3 zeigt die adaptive Linse der Empfangsoptik 14 beziehungsweise der Sendeoptik 24 in einer beispielhaften Ausführungsform als Flüssiglinse 26 nach dem Elektrobenetzungseffekt. Die Funktionsweise wird anhand dieser Flüssiglinse 26 erläutert, aber die Erfindung umfasst auch andere adaptive Linsen, beispielsweise solche mit einer Flüssigkeitskammer und einer diese bedeckenden Membran, deren Wölbung durch Druck auf die Flüssigkeit verändert wird, oder Linsen mit einem gelartigen optisch durchlässigen Material, dass durch eine Aktorik mechanisch verformt wird.

Die aktiv durchstimmbare Flüssiglinse 26 weist zwei transparente, nicht mischbare Flüssigkeiten 28, 30 mit unterschiedlichen Brechungsindices und gleicher Dichte auf. Die Form der Flüssigkeitsgrenzschicht 32 zwischen den beiden Flüssigkeiten 28, 30 wird zur optischen Funktion verwendet. Die Aktuierung basiert auf dem Prinzip der Elektrobenetzung, welche eine Abhängigkeit der Oberflächen- oder Grenzflächenspannung vom angelegten elektrischen Feld zeigt. Deshalb ist es möglich, die Form der Grenzschicht 32 und damit die optischen Eigenschaften der Flüssiglinse 26 durch elektrische Ansteuerung an einem Anschluss 34 zu verändern, wodurch entsprechende Spannungen an einer Elektrode 36 anliegen. Neben einer Verstellung der Brennweite ist auch eine Verkippung vorstellbar, wofür dann mindestens eine weitere Elektrode an der Flüssiglinse 26 vorgesehen ist.

Anhand der Figuren 4 und 5 wird nun eine Bestimmung der Fokussierzeit durch die Steuer- und Auswertungseinheit 18 beschrieben, also derjenigen Ansprechzeit der Flüssiglinse 26, bis sie nach Ansteuerung mit einer Spannung für eine gewünschte neue Fokuslage die Form für diese Brennweite tatsächlich eingenommen hat. Die Fokussierzeit wird hier als Funktion F(V1, V2, T) der Temperatur T der Flüssiglinse 26, der bisher angelegten Spannung V1 und der neu angelegten Spannung V2 betrachtet.

Die Funktion F kann als solche oder als Nachschlagtabelle in einem Speicher des Sensors 10 abgelegt werden. Die Steuer- und Auswertungseinheit 18 kennt die Spannungen V1 und V2, da sie für das Verstellen der Flüssiglinse 26 zuständig ist, und ermittelt die Temperatur über die Temperatureinheit. Damit kann die zugehörige Fokussierzeit aus der Nachschlagtabelle gelesen werden.

Um die Funktion F(V1, V2, T) vorab zu gewinnen, wird die Fokussierzeit F für eine Vielzahl von Tupeln (V1, V2, T) gemessen. Zwischenwerte können modelliert oder interpoliert werden. Im Betrieb ist es sinnvoll, die Spannung V2 mit einer temperaturabhängigen Kompensationsfunktion zu korrigieren. Das geschieht aber im Folgenden vereinfachend nicht.

Figur 4 illustriert die Messung einer einzelnen Fokussierzeit. Zu Beginn hat die Flüssiglinse 26 eine Brennweite entsprechend der Spannung V1 eingenommen. Die Flüssiglinse 26 wird nun mit einem Spannungssprung ΔV auf V2 angesteuert und erreicht dann nach der Fokussierzeit die neue Brennweite zu V2. Um zu bewerten, wann die neue Brennweite erreicht ist, werden in kurzen Zeitabständen von beispielsweise 100 µs Bilder eines kontrastreichen Objekts in einem Abstand entsprechend der neuen Brennweite bei V2 aufgenommen, und der Kontrast dieser Bilder wird bestimmt.

Der Kontrastverlauf über die Bilder und damit die Zeit ist die in Figur 4 dargestellte Kurve. Der Kontrast ist anfangs noch nicht hoch, da die Flüssiglinse 26 wegen ihrer Trägheit noch nicht schnell genug reagiert hat. Der Kontrast nimmt dann zu und erreicht nach genügend langer Zeit ein Maximum. Mit gestrichelter Linie ist ein Anteil dieses Maximums von beispielsweise 90% markiert, und die benötigte Dauer bis dahin wird als Fokussierzeit für diesen Spannungssprung verwendet. Solche Messungen werden nun für eine Vielzahl von Tupeln (V1, V2, T) durchgeführt, wobei auch Mehrfachmessungen mit Mittelung für dasselbe Tupel möglich sind.

Figur 5 zeigt das Ergebnis solcher Messungen für einen festen Wert von V2, wobei der Zahlenwert für V2 rein beispielhaft 34 V ist. Auf der X-Achse ist die variierte Spannung V1 aufgetragen, auf der Y-Achse die variierte Temperatur, wobei hier die Skala nicht geordnet ist, sondern der Messreihe der jeweils für die Messung tatsächlich eingestellten Temperaturen entspricht. Die entsprechend Figur 4 gemessene Fokussierzeit ist Farb- beziehungsweise Grauwertcodiert. Anders ausgedrückt zeigt Figur 5 einen Schnitt durch die Funktion F(V1, V2, T) für festes V2=34 V. Die gesamte Funktion F(V1 V2, T) hätte noch eine weitere Dimension mit variierendem V2 und wäre so nicht darstellbar, kann aber durchaus bestimmt und im Speicher des Sensors 10 abgelegt werden.

Die Fokussierzeit nimmt gemäß Figur 5 mit der Temperatur ab. Sie liegt bei 6°C noch bei maximal 60 ms, bei 65° Grad nur noch bei 20 ms. Wenn sich V1 und V2 einander nähern, wird die Fokussierzeit mit <5 ms sehr gering. Die Spannung V1, bei der die Ansprechzeit minimiert wird, liegt nahe der Fokussierspannung V2, weist aber leichte Temperaturabhängigkeiten auf. Letzteres könnte ein Artefakt der teilweise indirekten Bestimmung der Spannungen und Temperaturen bei der Gewinnung der Daten für Figur 5 sein.

Die derart gewonnene Funktion F(V1, V2, T) kann nun für ein passives System ohne Temperaturregulierung verwendet werden. Nach Ablauf der Fokussierzeit ist gewährleistet, dass die Trägheit der Flüssiglinse 26 überwunden und die gewünschte Fokuslage eingestellt ist. Mit F(V1, V2, T) wird gewährleistet, dass darauf nicht unnötig lange gewartet wird, vielmehr der Sensor 10 nach jeder individuellen Umfokussierung so schnell wie möglich wieder verfügbar ist. In einer etwas einfacheren Ausführungsform wird eine Funktion F(ΔV, T) mit ΔV:=V2-V1 genutzt, bei der die Fokussierzeit nur vom Ausmaß der Änderung und nicht vom konkreten Start- beziehungsweise Endpunkt abhängt. Die Funktion F(ΔV, T) kann natürlich auch durch Vereinfachung aus F(V1, V2, T) gewonnen werden.

Wird wie zu Figur 1 beschrieben zusätzlich die Temperatur geregelt oder stabilisiert, so kann die Temperaturabhängigkeit der Fokussierzeit eliminiert werden. Da dann keine thermischen Effekte mehr auftreten, vereinfacht sich die Funktion für die Fokussierzeit von F(V1, V2, T) auf F(V1, V2) beziehungsweise von F(ΔV, T) auf F(ΔV).

## Patentansprüche

1. Optoelektronischer Sensor (10) mit einem Lichtsender (22) und/oder einem Lichtempfänger (16) und einer dem Lichtsender (22) und/oder dem Lichtempfänger (16) vorgeordneten Optik (14, 24), die eine adaptive Linse (26) aufweist, deren Brennweite veränderbar ist, sowie mit einer Steuer- und Auswertungseinheit (18), die dafür ausgebildet ist, ein Steuersignal an die adaptive Linse (26) auszugeben, um eine Brennweite einzustellen, sowie eine Fokussierzeit zu bestimmen, nach welcher die Brennweite eingestellt ist,
**dadurch gekennzeichnet,**
**dass** die Steuer- und Auswertungseinheit (18) weiterhin dafür ausgebildet ist, die Fokussierzeit in Abhängigkeit von der einzustellenden Änderung der Brennweite zu bestimmen.

2. Sensor (10) nach Anspruch 1,
wobei die Steuer- und Auswertungseinheit (18) dafür ausgebildet ist, den Ablauf der Fokussierzeit zu signalisieren und/oder die weitere Sensorfunktion bis zum Ablauf der Fokussierzeit zu verzögern.

3. Sensor (10) nach Anspruch 1 oder 2,
wobei das Steuersignal ein Spannungssignal ist.

4. Sensor (10) nach einem der vorhergehenden Ansprüche,
wobei die Steuer- und Auswertungseinheit (18) dafür ausgebildet ist, die Fokussierzeit in Abhängigkeit von der derzeitigen und der einzustellenden Brennweite zu bestimmen.

5. Sensor (10) nach einem der vorhergehenden Ansprüche,
der eine Temperaturmesseinheit (20) zur Bestimmung der Temperatur der adaptiven Linse (26) aufweist.

6. Sensor (10) nach einem der vorhergehenden Ansprüche,
wobei die Steuer- und Auswertungseinheit (18) dafür ausgebildet ist, die Fokussierzeit in Abhängigkeit von der Temperatur zu bestimmen.

7. Sensor (10) nach einem der vorhergehenden Ansprüche,
der ein Temperaturänderungselement (20) aufweist.

8. Sensor (10) nach einem der vorhergehenden Ansprüche,
der einen Speicher mit einer Nachschlagtabelle für Fokussierzeiten aufweist.

9. Sensor (10) nach einem der vorhergehenden Ansprüche,
wobei die Abhängigkeit der Fokussierzeit von möglichen Änderungen der Brennweite vorab dadurch bestimmt ist, dass eine jeweilige Änderung durchgeführt, während der Änderung die Fokuslage mit einem Gütemaß bewertet und die zugehörige Fokussierzeit als die Dauer bis zu einem Erreichen eines Mindestgütemaßes bestimmt wird, wobei insbesondere das Gütemaß ein Kontrastmaß und/oder das Mindestgütemaß ein Prozentsatz eines maximalen Gütemaßes nach langer Wartezeit ist.

10. Sensor (10) nach einem der vorhergehenden Ansprüche,
wobei die adaptive Linse (26) eine Flüssig- oder Gellinse ist und insbesondere zwei nicht mischbare Medien (28, 30) aufweist, deren gegenseitige Grenzfläche (32) durch Anlegen einer Spannung eine der Spannung entsprechende Krümmung aufweist.

11. Sensor (10) nach einem der vorhergehenden Ansprüche,
der als Kamera mit einem Bildsensor als Lichtempfänger (16) ausgebildet ist, wobei nach einem Umfokussieren durch Einstellen einer neuen Brennweite der adaptiven Linse (26) eine Aufnahme erst nach Ablauf der Fokussierzeit ausgelöst wird.

12. Verfahren zum Fokussieren der Optik (14, 24) eines optoelektronischen Sensors (10), wobei die Optik (14, 24) eine adaptive Linse (26) aufweist, deren Brennweite durch ein Steuersignal verändert wird, insbesondere ein Spannungssignal, wobei beim Verstellen der Brennweite eine Fokussierzeit bestimmt wird, nach welcher die Brennweite eingestellt ist,
**dadurch gekennzeichnet,**
**dass** die Fokussierzeit in Abhängigkeit von der einzustellenden Änderung der Brennweite bestimmt wird.

13. Verfahren nach Anspruch 12,
wobei die Fokussierzeit in Abhängigkeit von der derzeitigen und der einzustellenden Brennweite eingestellt wird, insbesondere in Abhängigkeit von einem Spannungssprung zwischen den Spannungssignalen für das Einstellen der derzeitigen und der einzustellenden Brennweite.

14. Verfahren nach Anspruch 12 oder 13,
wobei die Temperatur der adaptiven Linse (26) gemessen und die Fokussierzeit auch in Abhängigkeit von der Temperatur bestimmt wird.

15. Verfahren nach einem der Ansprüche 12 bis 14,
wobei die Abhängigkeit der Fokussierzeit von möglichen Änderungen der Brennweite vorab dadurch bestimmt wird, dass eine jeweilige Änderung durchgeführt, während der Änderung die Fokuslage mit einem Gütemaß bewertet und die zugehörige Fokussierzeit als die Dauer bis zu einem Erreichen eines Mindestgütemaßes bestimmt wird, wobei insbesondere das Gütemaß ein Kontrastmaß und/oder das Mindestgütemaß ein Prozentsatz eines maximalen Gütemaßes nach langer Wartezeit ist.

## Geänderte Patentansprüche

### Geänderte Patentansprüche gemäss Regel 137(2) EPÜ.

1. Optoelektronischer Sensor (10) mit einem Lichtsender (22) und/oder einem Lichtempfänger (16) und einer dem Lichtsender (22) und/oder dem Lichtempfänger (16) vorgeordneten Optik (14, 24), die eine adaptive Linse (26) aufweist, deren Brennweite veränderbar ist, sowie mit einer Steuer- und Auswertungseinheit (18), die dafür ausgebildet ist, ein Steuersignal an die adaptive Linse (26) auszugeben, um eine Brennweite und damit eine jeweils gewünschte Fokuslage einzustellen, sowie aus einer Nachschlagtabelle, einer Funktion oder einem Algorithmus eine Fokussierzeit zu bestimmen, die angibt, wie lange es dauert, bis die Umfokussierung abgeschlossen ist, d.h die adaptive Linse die neue Brennweite eingestellt hat,
**dadurch gekennzeichnet,**
**dass** die Steuer- und Auswertungseinheit (18) weiterhin dafür ausgebildet ist, die Fokussierzeit in Abhängigkeit von der einzustellenden Änderung der Brennweite zu bestimmen.

2. Sensor (10) nach Anspruch 1,
wobei die Steuer- und Auswertungseinheit (18) dafür ausgebildet ist, den Ablauf der Fokussierzeit zu signalisieren und/oder die weitere Sensorfunktion bis zum Ablauf der Fokussierzeit zu verzögern.

3. Sensor (10) nach Anspruch 1 oder 2,
wobei das Steuersignal ein Spannungssignal ist.

4. Sensor (10) nach einem der vorhergehenden Ansprüche,
wobei die Steuer- und Auswertungseinheit (18) dafür ausgebildet ist, die Fokussierzeit in Abhängigkeit von der derzeitigen und der einzustellenden Brennweite zu bestimmen.

5. Sensor (10) nach einem der vorhergehenden Ansprüche,
der eine Temperaturmesseinheit (20) zur Bestimmung der Temperatur der adaptiven Linse (26) aufweist.

6. Sensor (10) nach einem der vorhergehenden Ansprüche,
wobei die Steuer- und Auswertungseinheit (18) dafür ausgebildet ist, die Fokussierzeit in Abhängigkeit von der Temperatur zu bestimmen.

7. Sensor (10) nach einem der vorhergehenden Ansprüche,
der ein Temperaturänderungselement (20) aufweist.

8. Sensor (10) nach einem der vorhergehenden Ansprüche,
der einen Speicher mit einer Nachschlagtabelle für Fokussierzeiten aufweist.

9. Sensor (10) nach einem der vorhergehenden Ansprüche,
wobei die Abhängigkeit der Fokussierzeit von möglichen Änderungen der Brennweite vorab dadurch bestimmt ist, dass eine jeweilige Änderung durchgeführt, während der Änderung die Fokuslage mit einem Gütemaß bewertet und die zugehörige Fokussierzeit als die Dauer bis zu einem Erreichen eines Mindestgütemaßes bestimmt wird, wobei insbesondere das Gütemaß ein Kontrastmaß und/oder das Mindestgütemaß ein Prozentsatz eines maximalen Gütemaßes nach langer Wartezeit ist.

10. Sensor (10) nach einem der vorhergehenden Ansprüche,
wobei die adaptive Linse (26) eine Flüssig- oder Gellinse ist und insbesondere zwei nicht mischbare Medien (28, 30) aufweist, deren gegenseitige Grenzfläche (32) durch Anlegen einer Spannung eine der Spannung entsprechende Krümmung aufweist.

11. Sensor (10) nach einem der vorhergehenden Ansprüche,
der als Kamera mit einem Bildsensor als Lichtempfänger (16) ausgebildet ist, wobei nach einem Umfokussieren durch Einstellen einer neuen Brennweite der adaptiven Linse (26) eine Aufnahme erst nach Ablauf der Fokussierzeit ausgelöst wird.

12. Verfahren zum Fokussieren der Optik (14, 24) eines optoelektronischen Sensors (10), wobei die Optik (14, 24) eine adaptive Linse (26) aufweist, deren Brennweite durch ein Steuersignal, insbesondere ein Spannungssignal, verändert und damit eine jeweils gewünschte Fokuslage eingestellt wird, wobei beim Verstellen der Brennweite aus einer Nachschlagtabelle, einer Funktion oder einem Algorithmus eine Fokussierzeit bestimmt wird, die angibt, wie lange es dauert, bis die Umfokussierung abgeschlossen ist, d.h die adaptive Linse die neue Brennweite eingestellt hat,**dadurch gekennzeichnet,**
**dass** die Fokussierzeit in Abhängigkeit von der einzustellenden Änderung der Brennweite bestimmt wird.

13. Verfahren nach Anspruch 12,
wobei die Fokussierzeit in Abhängigkeit von der derzeitigen und der einzustellenden Brennweite eingestellt wird, insbesondere in Abhängigkeit von einem Spannungssprung zwischen den Spannungssignalen für das Einstellen der derzeitigen und der einzustellenden Brennweite.

14. Verfahren nach Anspruch 12 oder 13,
wobei die Temperatur der adaptiven Linse (26) gemessen und die Fokussierzeit auch in Abhängigkeit von der Temperatur bestimmt wird.

15. Verfahren nach einem der Ansprüche 12 bis 14,
wobei die Abhängigkeit der Fokussierzeit von möglichen Änderungen der Brennweite vorab dadurch bestimmt wird, dass eine jeweilige Änderung durchgeführt, während der Änderung die Fokuslage mit einem Gütemaß bewertet und die zugehörige Fokussierzeit als die Dauer bis zu einem Erreichen eines Mindestgütemaßes bestimmt wird, wobei insbesondere das Gütemaß ein Kontrastmaß und/oder das Mindestgütemaß ein Prozentsatz eines maximalen Gütemaßes nach langer Wartezeit ist.
